# EUROPÄISCHE PATENTSCHRIFT

(11) **EP 1 485 312 B1**
(45) Veröffentlichungstag und Bekanntmachung des Hinweises auf die Patenterteilung: **20.01.2010**
(21) Anmeldenummer: 03708079.3
(22) Anmeldetag: 01.02.2003
(51) Int. Cl.: B65G 49/02, B05C 3/10, B65G 49/04, B65G 35/00, B62D 65/00

(54) **ANLAGE ZUM BEHANDELN, INSBESONDERE ZUM KATAPHORETISCHEN TAUCHLACKIEREN VON FAHRZEUGKAROSSERIEN**
SYSTEM FOR TREATING, IN PARTICULAR, CATAPHORETICALLY IMMERSION PAINTING VEHICLE BODIES
DISPOSITIF DE TRAITEMENT, NOTAMMENT DE PEINTURE PAR IMMERSION CATAPHORETIQUE DE CARROSSERIES AUTOMOBILES

(30) Priorität: 13.03.2002 DE 10210942
(43) Veröffentlichungstag der Anmeldung: 15.12.2004
(73) Patentinhaber: EISENMANN Anlagenbau GmbH & Co. KG, 71032 Böblingen (DE)
(72) Erfinder: WEINAND, Hans-Joachim, 71254 Ditzingen (DE)
(74) Vertreter: Ostertag, Ulrich
(86) Internationale Anmeldenummer: PCT/EP2003/001010
(87) Internationale Veröffentlichungsnummer: WO 2003/076315

(56) Entgegenhaltungen:
- DE-A- 19 641 048
- DE-U- 20 022 634
- DE-U- 20 105 676

## Beschreibung

Die Erfindung betrifft eine Anlage zum Behandeln, insbesondere zum kataphoretischen Tauchlackieren, von Gegenständen, insbesondere von Fahrzeugkarosserien, nach dem Oberbegriff des Patentanspruchs 1.

Fahrzeugkarosserien oder andere Gegenstände, die das letzte Spülbad oder die letzte Spritzzone einer kataphoretischen Tauchlackierung verlassen, müssen vor dem Eintritt in den Trockner gut abgetropft werden, wobei gleichzeitig ein Abdunsten stattfindet. Dabei muß vermieden werden, daß sich auf den Gegenständen Tropfnasen, ssgenannte "Läufer", bilden, die nach dem Trocknen im nachgeschalteten Trockner nur noch durch mühsame Schleifarbeiten entfernt werden können. Bei bekannten Anlagen der eingangs genannten Art erfolgt hinter dem letzten Bad der kataphoretischen Tauchlackierzone ein Wechsel der Fördereinrichtung. Beispielsweise werden die mit Hilfe eines Pendelförderers durch die verschiedenen Bäder geführten Fahrzeugkaraosserien, die ihrerseits von Skids getragen sind, in der Abtropfzone auf einen Rollenbahnförderer abgesetzt. Dieser Rollenbahnförderer muß wegen der stark verschmutzenden Wirkung der aus dem Bad verschleppten Flüssigkeit im wesentlichen aus Edelstahl gefertigt werden.

Damit die Flüssigkeit von den Fahrzeugkarosserien und insbesondere aus deren Hohlräumen gut abfließen kann, ist bei den bekannten Lackieranlagen innerhalb der Abtropfzone eine gesonderte Kippvorrichtung vorgesehen. Die Fahrzeugkarosserien müssen von dem Rollenbahn-Förderer auf diese Kippvorrichtung übergeben werden, werden dort in eine gegenüber der Horizontalen verkippte Lage gebracht, sodann wieder in die Horizontale zurückverschwenkt und erneut auf das Rollenbahn-Fördersystem übergeben. Dies ist apparativ sehr aufwendig. Darüber hinaus kann bei einer schnellen Taktzeit der Lackieranlage die jeweils in der Kippvorrichtung befindliche Fahrzeugkaraosserie nur für verhältnißmäßig kurze Zeit aus der Horizontalen zum Abtropfen verschwenkt werden. Der Abtropfvorgang kann daher in vielen Fällen innerhalb der Kippvorrichtung nicht abgeschlossen werden, was dazu führt, daß sich auf den Oberflächen der Fahrzeugkarosserie Tropfnasen ausbilden können.

Ein weiterer Nachteil der bekannten Anlage besteht darin, daß mit Hilfe der Kippvorrichtung im allgemeinen nur eine einzige Winkelposition der Fahrzeugkarosserien gegenüber der Horizontalen herbeigeführt werden kann. Es ist jedoch häufig nicht gewährleistet, daß in dieser einzigen Winkelposition die verschleppte Flüsigkeit zuverlässig aus allen Hohlräumen der Fahrzeugkarosserie auslaufen kann.

Anlagen ähnlich derjenigen der eingangs genannten Art sind im Stand der Technik bekannt. Bei der in der DE 196 41 048 A1 beschriebenen Anlage wird die Translationsbewegung durch einen Behandlungsbereich hindurch mit einer Drehbewegung gekoppelt, wobei die Koppelung mechanisch mittels beidseits des Behandlungsbereichs angeordneter Leitschienen erfolgt. Die Drehbewegung und eine ggf. überlagerte Schaukelbewegung dienen der Entfernung von Luftblasen, die in der Karosserie eingeschlossen sind. Die erzielbaren Drehwinkel hängen von der Auslegung der mechanischen Koppelung ab, sind also nicht frei wählbar.

Bei einer aus der DE 200 22 634 U1 bekannten Anlage erfolgt der Eintauchvorgang in ein Behandlungsbad quer zur Förderrichtung, wodurch die Gesamtlänge der Anlage kleiner gehalten werden kann. Die Translationsbewegung und die Drehbewegung sind hier entkoppelt, jedoch ist der Freiheitsgrad der einstellbaren Kippwinkel auch hier begrenzt.

Aufgabe der vorliegenden Erfindung ist es, eine Anlage der eingangs genannten Art so auszugestalten, daß sie mit geringerem apparativen Aufwand auskommt und gleichwohl ein besseres Ergebnis in der Abtropfzone erzielt.

Diese Aufgabe wird erfindungsgemäß durch eine Anlage mit den Merkmalen des Patentanspruchs 1 gelöst.

Der Transportwagen, von dem die vorliegende Erfindung Gebrauch macht, ist grundsätzlich aus der DE-U-201 05 676 bekannt. Dort wird er aber nur zum Ein- und Austauchen der zu behandelnden Gegenstände in ein Bad eingesetzt. Die vorliegende Erfindung erkennt, daß sich dieser Transportwagen aufgrund seiner Bauweise nicht nur als Ein- und Austauchvorrichtung in Bäder, sondern wegen der Möglichkeit, die transportierten Gegenstände in jede beliebige Winkelstellung zu bringen, auch als Kippvorrichtung in der Abtropfzone eignet. Die Laufflächen, auf welchen sich der Transportwagen bewegt, brauchen also nur über die Zone der Behandlungsbäder hinaus durch die Abtropfzone hinweg verlängert zu werden. Ein Umsetzen der Gegenstände auf eine gesonderte Fördereinrichtung innerhalb der Abtropfzone ist daher ebenso wenig erforderlich wie eine Verriegelung auf einer gesonderten Kippvorrichtung und eine Entriegelung für den Weitertransport, wie dies beim Stande der Technik notwendig war.

Im Gegensatz zu letzterem kann bei der vorliegenden Erfindung das Abtropfen in gegenüber der Horizontalen verkippter Position auch während der Bewegung des Transportwagens erfolgen. Die Abtropfzeit kann auf diese Weise gegenüber derjenigen in bekannten Anlagen verlängert werden. Werden aufeinanderfolgend unterschiedliche Gegenstände behandelt, kann für jeden Gegenstand die zum Abtropfen geeignete Winkelposition gegenüber der Horizontalen gewählt werden.

Ein weiterer, großer Vorteil der Verwendung derartiger Transportwagen ist darin zu sehen, daß durch eine geeignete Schrägstellung der Fahrzeugkaraosserien bereits über dem letzten Bad ein sehr weitgehendes Abtropfen erreicht werden kann und die Verschleppung von Badflüssigkeit schon aus diesem Grunde gegenüber dem Stande der Technik erheblich verringert ist. Insgesamt kann bei der erfindungsgemäßen Anlage das Abtropfen vor dem Eintritt der Gegenstände in den Trockner optimal abgeschlossen werden, so daß das Auftreten von Tropfnasen, die eine aufwendige Nachbehandlung erforderlich machen würden, weitgehend vermieden werden kann.

Besonders bevorzugt wird diejenige Ausführungsform der Erfindung, bei welcher der mindestens eine Transportwagen so steuerbar ist, daß seine Halterung innerhalb der Abtropfzone in mindestens zwei Positionen gebracht wird, in denen sie unterschiedlich gegenüber der Horizontalen verkippt ist. Mit dieser Ausgestaltung wird der Erfahrung Rechnung getragen, daß sich bei kompliziert geformten und Hohlräumen enthaltenden Gegenständen häufig keine (einzige) Winkelposition gegenüber der Horizontalen finden lässt, in der von allen Stellen und aus allen Hohlräumen die Flüssigkeit gut ablaufen bzw. abtropfen kann.

Ein Ausführungsbeispiel der Erfindung wir nachfolgend anhand der Zeichnung näher erläutert; es zeigen
- Figur 1:: eine Seitenansicht eines Transportwagens, der in der Lackieranlage verwendet wird, mit einer hieran befestigten Fahrzeugkarosserie in normaler Transportposition;
- Figur 2:: eine Seitenansicht des Transportwagens ähnlich der Figur 1, in welcher die Fahrzeugkarosserie jedoch aus der Transportposition verschwenkt ist;
- Figur 3:: die Draufsicht auf den Transportwagen von Figur 2;
- Figur 4:: eine perspektivische Ansicht des Transportwagens samt Fahrzeugkarosserie von Figur 1;
- Figur 5:: einen Schnitt durch Figur 3 gemäß der dortigen Linie VIII-VIII;
- Figuren 6: und 7: vergrößerte Detailansichten des Transportwagens im Bereich der auf Laufflächen aufstehenden Räder;
- Figur 8:: schematisch den Übergangsbereich der Lackieranlage zwischen dem letzten Sprüh-/Tauchbehälter und dem KTL-Trockner.

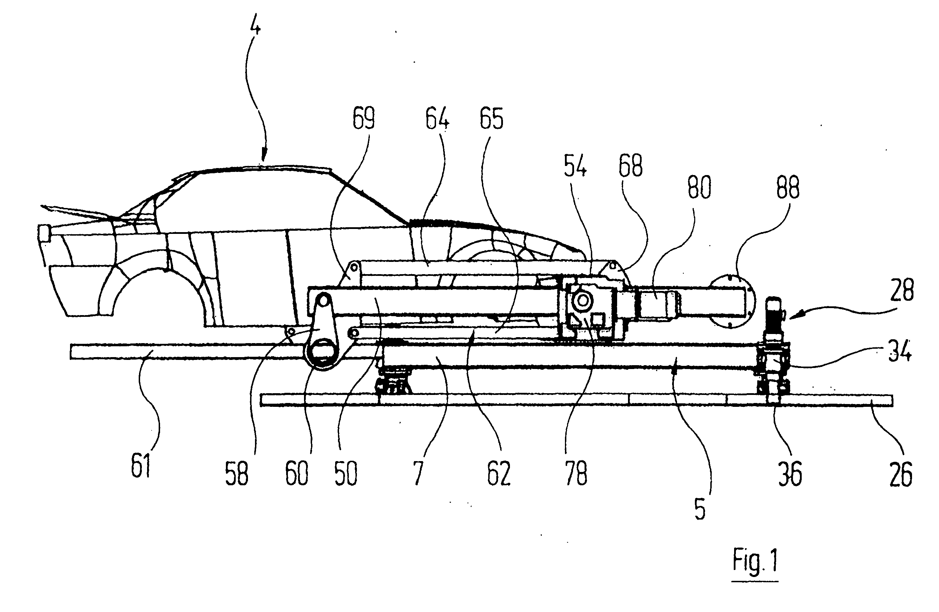

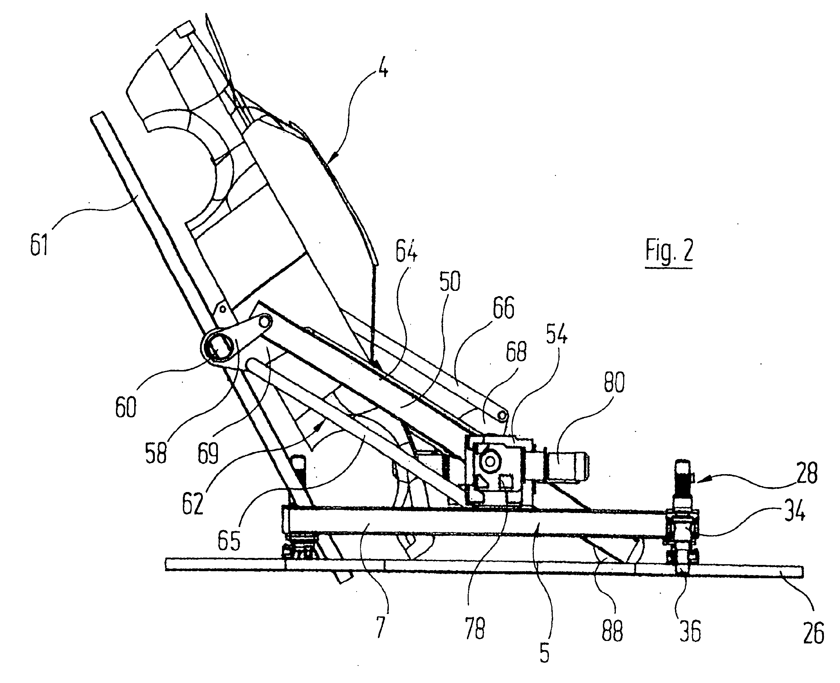

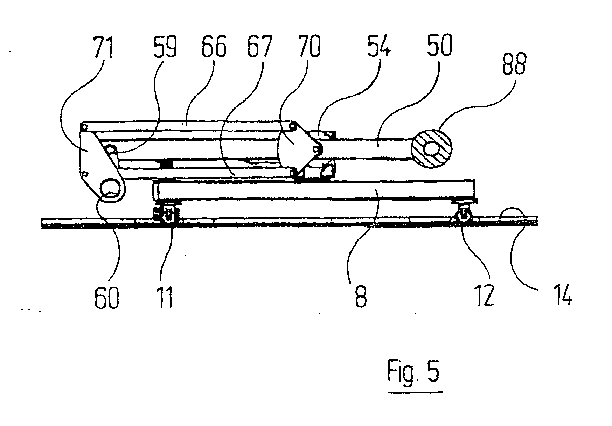

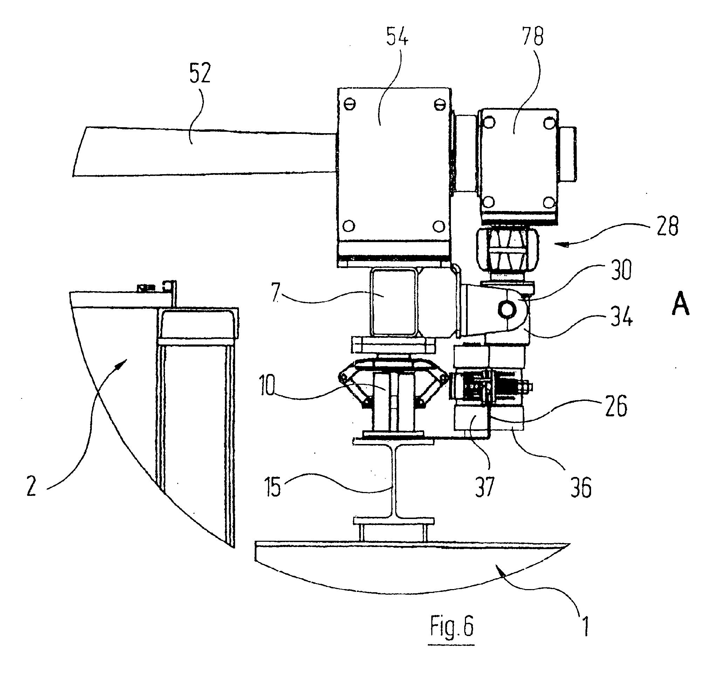

Nachfolgend wird zunächst anhand der Figuren 1 bis 7 die Bauweise von Transportwagen 5 näher beschrieben, wie sie in der in den weiteren Figuren dargestellten Lackieranlage zum Einsatz kommen. Derartige Transportwagen 5 sind zwar grundsätzlich aus der DE-U-201 05 676 bekannt, auf die ergänzend Bezug genommen wird. Die Kenntnis der Bewegungskinematik dieser Transportwagen 5 erschließt aber erst das Verständnis der Gesamtanlage, weswegen die Erläuterung der Transportwagen 5 in der vorliegenden Beschreibung, soweit erforderlich, wiederholt wird.

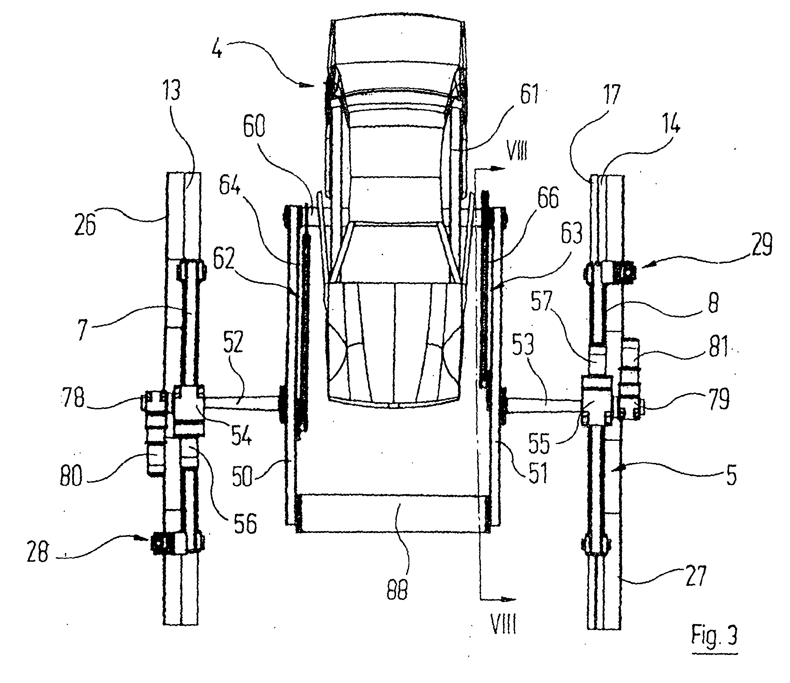

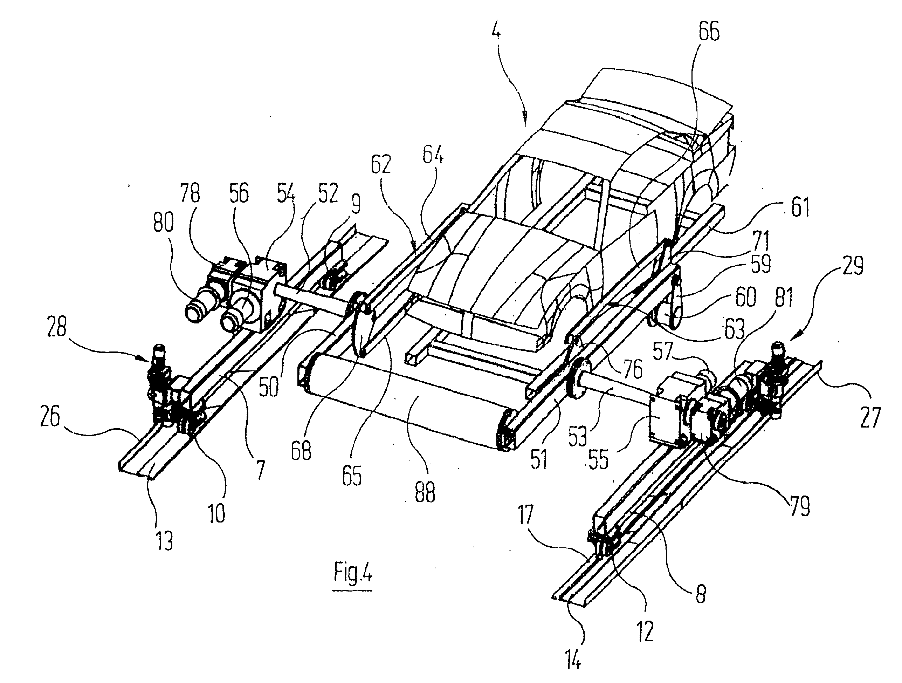

Wie insbesondere die Figuren 3 und 4 zeigen, besitzt jeder Transportwagen 5 zwei Längstraversen 7, 8, an deren Unterseite jeweils zwei Doppelräder 9, 10 bzw. 11, 12 um eine horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

Die Doppelräder 9, 10 rollen auf einer ersten Lauffläche 13 und die Doppelräder 11, 12 auf einer hierzu parallelen zweiten Lauffläche 14 ab. Die Laufflächen 13, 14 sind ihrerseits auf jeweils einem I-Profilträger 15, 16 montiert, der von einem nicht dargestellten Stahlbau getragen wird.

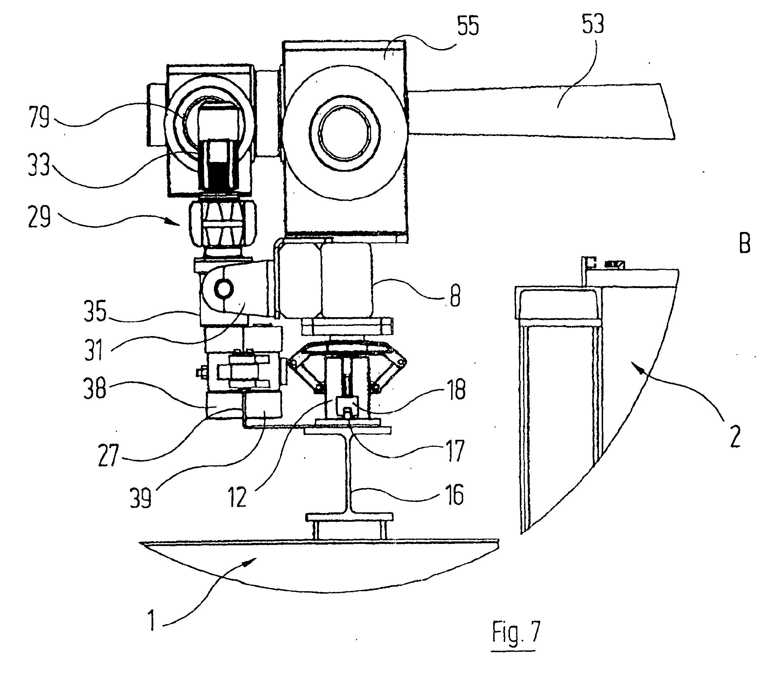

In der Mitte der in den Figuren 3 und 4 rechten, zweiten Lauffläche 14 ist eine Führungsrippe 17 angebracht, die von eine komplementäre Ausnehmung aufweisenden Führungsgliedern 18 (vgl. Figur 7) übergriffen wird. Jeweils ein Führungsglied 18 ist mit dem Drehschemel eines zugeordneten Doppelrads 11 bzw. 12 so verbunden, daß es dieses Doppelrad 11 bzw. 12 entsprechend dem Verlauf der Führungsrippe 17 um die vertikale Achse verdreht. Auf diese Weise folgen die Doppelräder 11, 12 der Lauffläche 14. Die der ersten, in den Figuren 3 und 4 linken Lauffläche 13 zugeordneten Doppelräder 9, 10 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können die Genauigkeitsanforderungen an die Führungsmittel, mit denen die Transportwagen 5 auf den Laufflächen 13, 14 gehalten werden, gering gehalten werden.

Auf den Transportwagen 5 werden Fahrzeugkarosserien 4 mit Hilfe einer Eintauchvorrichtung getragen, die beidseits der Fahrzeugkarosserien 4 jeweils eine Schwenkvorrichtung umfaßt. Jede dieser Schwenkvorrichtungen besitzt einen Schwenkarm 50, 51, der sich in noch zu beschreibender Weise in einer vertikalen Ebene, die parallel zur Förderrichtung verläuft, verschwenken kann. Hierzu ist jeder Schwenkarm 50, 51 über eine Stummelwelle 52, 53, die senkrecht zur Förderrichtung verläuft, mit der Ausgangswelle eines Getriebes 54, 55 verbunden. Das Getriebe 54, 55 ist an der jeweiligen Längstraverse 7, 8 des Transportwagens 5 etwa in deren mittlerem Bereich befestigt. Es wird von einem Motor 56 bzw. 57 angetrieben, der seitlich an das Getriebe 54, 55 angeflanscht ist.

Die in Bewegungsrichtung hinteren Enden der Schwenkarme 50, 51 sind gelenkig mit einer Lasche 58, 59 verbunden, die sich in der normalen, in Figur 1 dargestellten Transportposition senkrecht vom entsprechenden Schwenkarm 50, 51 nach unten erstreckt. Die unteren Enden der Laschen 58, 59 sind über eine senkrecht zur Bewegungsrichtung verlaufende Quertraverse 60 miteinander verbunden, die ihrerseits starr mit dem mittleren Bereich einer Tragplattform 61 für die Fahrzeugkarosserie 4 in Verbindung steht. Die Erstreckungsrichtung der beiden Laschen 58, 59 verläuft dabei senkrecht zur Ebene der Tragplattform 61.

Die Winkelstellung, welche die Laschen 58, 59 gegenüber den Schwenkarmen 50, 51 einnehmen, wird jeweils durch eine Verstelleinrichtung bestimmt, die insgesamt das Bezugszeichen 62 bzw. 63 trägt. Jede dieser Verstelleinrichtungen 62, 63 umfaßt ein Gestänge mit zwei parallelen Schubstangen 64, 65 bzw. 66, 67, die an ihren gegenüberliegenden Enden jeweils über eine Verbindungslasche 68, 69 bzw. 70, 71 miteinander verbunden sind. Die in Bewegungsrichtung hinteren Verbindungslaschen 69 bzw. 71 sind an ihrem unteren Ende starr an der Quertraverse 60 festgemacht.

Die in Bewegungsrichtung vorne liegende Verbindungslaschen 70, 71 dagegen sind starr jeweils mit einer Stummelwelle verbunden, die in der Zeichnung nicht erkennbar ist, da sie sich koaxial durch die zugeordnete, als Hohlwelle ausgebildete Stummelwelle 52, 53 hindurcherstreckt.

Diese weiteren Stummelwellen verlaufen auch durch die Getriebe 54, 55 hindurch und sind an die Ausgangswellen weiterer Getriebe 78, 79 angekoppelt, die seitlich an den Getrieben 54, 55 befestigt sind. Auch an die Getriebe 78, 79 sind Antriebsmotoren 80, 81 angeflanscht.

Die vorderen Enden der beiden Schwenkarme 50, 51 tragen gemeinsam ein Gegengewicht 88, so daß die auf die Stummelwellen 52, 53 wirkenden Drehmomente annähernd bei aufgesetzter Fahrzeugkarosserie 4 ausbalanciert sind.

Die Doppelräder 19 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 3 bis 7 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Schwenkbewegungen der der Schwenkarme 50, 51 und der Tragplattform 61 ausführt.

Zusammenfassend lassen sich die Bewegungsmöglichkeiten einer auf einem Transportwagen 5 getragenen Fahrzeugkarosserie 4 wie folgt beschreiben:

Die Gesamtbewegung ergibt sich aus einer Überlagerung der linearen Translationsbewegung des Transportwagens 5, einer ersten Schwenkbewegung, welche die Schwenkarme 50, 51 gegenüber den Längstraversen 7, 8 ausführen und die mit einem Anheben bzw. Absenken der Fahrzeugkarosserie 4 verbunden ist, und einer zweiten Schwenkbewegung, welche die auf der Tragplattform 61 befindliche Fahrzeugkarosserie 4 gegenüber den Schwenkarmen 50, 51 ausführt. All diese Bewegungsarten können vollständig unabhängig voneinander durchgeführt werden, was zu praktisch beliebigen Bewegungskinematiken der Fahrzeugkarosserie 4 führt. Beim oben beschriebenen Ausführungsbeispiel eines Transportwagens 5 wird die Schwenkbewegung auf die Tragplattform 61 von den Motoren 80, 81 durch gestängeartige Verstelleinrichtungen 62, 63 übertragen. Selbstverständlich können die Verstelleinrichtungen aber auch anders ausgestaltet sein, beispielsweise endlose Metallbänder als Drehmomentübertragende Elemente enthalten.

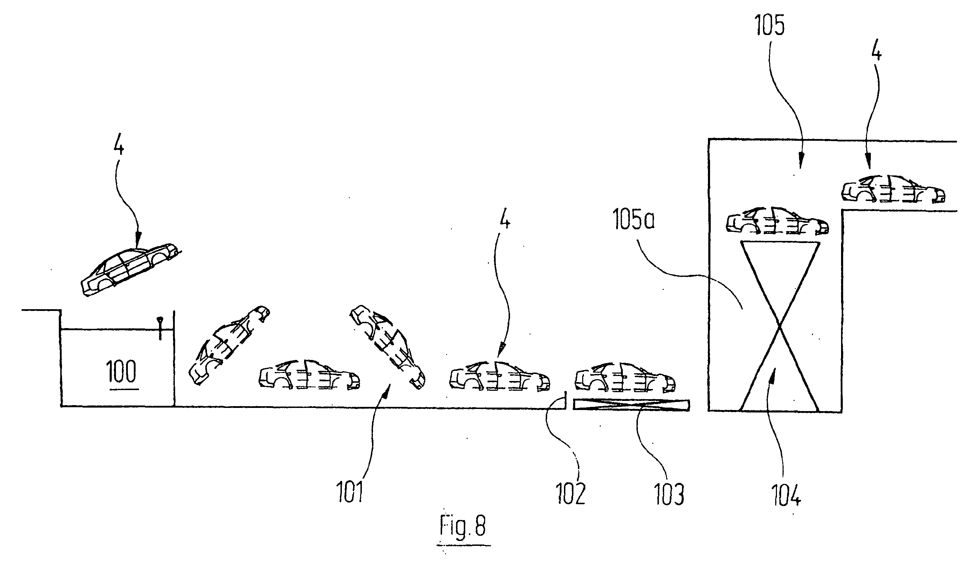

Nunmehr wird auf die Figur 8 Bezug genommen, in welcher der im vorliegenden Zusammenhang interessierende Ausschnitt einer Lackieranlage gezeigt ist. In diesen Figur ist eine Fahrzeugkarosserie 4 zur Darstellung des Bewegungsablaufes an unterschiedlichen Stellen sowie in unterschiedlichen Höhen und Winkeln zur Horizontalen dargestellt. Diese Fahrzeugkarosserie 4 ist als von einem Transportwagen 5 getragen zu denken. Letzterer ist selbst zur Entlastung der Figuren nicht abgebildet. Aus der obigen Beschreibung des Transportwagens 5 folgt jedoch ohne weiteres, daß und wie die Fahrzeugkarosserie 4 die jeweiligen Positionen einnehmen kann.

Im linken Bereich der Figur 8 ist die letzte Behandlungsstufe als Spülbad 100 einer kataphoretischen Tauchlackierzone der Lackieranlage dargestellt, zu der, weiter links an den in Figur 8 dargestellten Ausschnitt anschließend, weitere Spülbäder und/oder Spritzzonen sowie ein kataphoretisches Tauchlackierbad gehören. Die Fahrzeugkarosserie 4 bewegt sich auf dem Transportwagen 5 "netto" in Figur 8 von links nach rechts. Unter einer "Nettobewegung" wird verstanden, daß sich der Transportwagen 5 insgesamt von links nach rechts bewegt, was jedoch zeitweilige Bewegungsumkehrungen nicht ausschließt, wenn dies zur Erzielung einer bestimmten Kinematik der Fahrzeugkarosserie 4 benötigt wird. Um ein Beispiel zu nennen: Wenn eine Fahrzeugkarosserie 4 im wesentlichen senkrecht angehoben werden soll, werden die Schwenkarme 50, 51 des Transportwagens 5 entsprechend verschwenkt; die mit dieser Schwenkbewegung der Fahrzeugkarosserie 4 verbundene Bewegungskomponente in horizontaler Richtung wird durch eine entsprechende Bewegung des Transportwagens 5 in horizontaler Richtung, die auch gegenläufig zur "Netto-Transportrichtung" sein kann, kompensiert.

An das Spülbad 100 der katalytischen Tauchlackierzone schließt sich eine Abtropfzone 101 an. Auch durch diese Abtropfzone 101 werden die Fahrzeugkarosserien 4 auf dem selben Transportwagen 5 hindurchbewegt, auf dem sie die kataphoretische Tauchlackierzone durchlaufen haben. Unmittelbar nach dem Austauchen aus dem Spülbad 100 wird die Fahrzeugkarosserie 4 durch entsprechendes Verschwenken der Schwenkarme 50, 51 und der Tragplattform 61 so steil schräg gestellt, daß das vorlaufende Karosserieende nach oben und das Heck der Karosserie nach unten zeigt. In dieser Position kann die aus dem Spülbad 100 von der Fahrzeugkarosserie 4 ausgetragene Flüssigkeit auslaufen und abtropfen und in einer auf dem Boden der Abtropfzone 101 angeordneten Wanne 102 gesammelt werden. Die Fahrzeugkarosserie 4 kann in dieser "gekippten" Position vom Transportwagen 5 weiterbefördert werden; die Bewegung muß also zum Abtropfen nicht unterbrochen werden.

Im Verlauf der Bewegung des Transportwagens 5 durch die Abtropfzone 101 wird die Fahrzeugkarosserie 4, wie in Figur 8 dargestellt, nach einer gewissen Zeit wieder in ihre normale, horizontale Position zurückverschwenkt. Es folgt durch entsprechende Bewegung der Schwenkarme 50, 51 und der Tragplattform 61 des Transportwagens 5 eine Verschwenkung der Fahrzeugkarosserie 4 in der entgegengesetzten Richtung, in welcher also der vorlaufende Bereich der Fahrzeugkarosserie 4 nach unten zeigt, während das Heck angehoben ist. In dieser Position kann verschleppte Flüssigkeit aus dem Spülbad 100 aus solchen Hohlräumen auslaufen, bei denen dies in der zuerst eingenommenen verkippten Position nicht möglich war. Abschließend wird in der Abtropfzone 101 die Fahrzeugkarosserie 4 wieder horizontal gestellt.

An die Abtropfzone 101 schließt sich eine Übergabeeinrichtung 103 an, deren Bauweise im vorliegenden Zusammenhang nicht von Interesse ist. Diese Übergabeeinrichtung 103 nimmt die Fahrzeugkarosserie 4 von dem Transportwagen 5 ab, der zu einer neuen Beladung mit einer anderen Fahrzeugkarosserie 4 zurückgeführt wird. Die Übergabeeinrichtung 103 platziert sodann die Fahrzeugkarosserie 4 auf einer Hubvorrichtung 104 in der Einlaufschleuse 105a eines herkömmlichen Trockners 105, wie er üblicherweise der kataphoretischen Tauchlackierzone einer Lackieranlage nachgeschaltet ist. Erneut ist die genaue Bauweise sowohl der Hubvorrichtuntg 104 als auch des Trockners 105 im vorliegenden Zusammenhang ohne Bedeutung.

## Patentansprüche

1. Anlage zum Behandeln, insbesondere zum kataphoretischen Tauchlackieren, von Gegenständen (4), insbesondere von Fahrzeugkarosserien, mit
a) mindestens einem Bad (100), in dem sich eine Behandlungsflüssigkeit befindet, in welche die Gegenstände (4) eingetaucht werden sollen;
b) einer Fördereinrichtung, mit welcher die Gegenstände (4) durch die Anlage geführt und dabei in das mindestens eine Bad (100) eingetaucht werden;
c) einer Abtropfzone (101), die in Bewegungsrichtung hinter dem letzten Bad (100) angeordnet ist;
d) einer Kippvorrichtung innerhalb der Abtropfzone, (101) in welcher die Gegenstände (4) in eine zum Abtropfen geeignete Winkelstellung zur Horizontalen verkippt werden können;
e) einem der Abtropfzone (101) nachgeschalteten Trockner (105),
**dadurch gekennzeichnet, daß**
f) die Fördereinrichtung mindestens einen Transportwagen (5) umfasst, der seinerseits aufweist:
fa) ein entlang des Bewegungsweges der Gegenstände (4) verfahrbares Fahrwerk (7, 8, 9 bis 12);
fb) mindestens einen an dem Fahrwerk (7, 8, 9 bis 12) angelenkten Schwenkarm (50, 51);
fc) eine an dem Schwenkarm (50, 51) angelenkte Halterung (61) für mindestens einen Gegenstand (4);
fd) unabhängig voneinander betätigbare Antriebe (32, 33, 56, 57, 80, 81) für die Translationsbewegung, die Schwenkbewegung des mindestens einen Schwenkarmes (50, 51) und der Halterung (61) ;
g) der mindestens eine Transportwagen (5) zugleich als Kippvorrichtung dient und hierzu über die Abtropfzone (101) bis in die Nähe des Trockners (105) verfahrbar ist.

2. Anlage nach Anspruch 1, **dadurch gekennzeichnet,**
**daß** der mindestens eine Transportwagen (5) so steuerbar ist, daß seine Halterung (61) innerhalb der Abtropfzone (101) in mindestens zwei Positionen gebracht wird, in denen sie unterschiedlich gegenüber der Horizontalen verkippt ist.

## Claims

1. System for treating, in particular for cataphoretically
dip-coating, articles (4), in particular vehicle bodies, comprising
a) at least one bath (100), in which a treatment liquid is situated, into which the articles (4) are to be dipped;
b) a feed device, by means of which the articles (4) are conveyed through the system and in the process are dipped into the at least one bath (100);
c) a dripping zone (101), which is disposed in direction of motion downstream of the last bath (100);
d) a tilting apparatus within the dripping zone, in which apparatus (101) the articles (4) may be tilted into an angular position relative to the horizontal that is suitable for dripping-off;
e) a drier (105) disposed downstream of the dripping zone (101),
**characterized in that**
f) the feed device comprises at least one feed carriage (5), which in turn comprises:
fa) running gear (7, 8, 9, to 12) movable along the path of motion of the articles (4);
fb) at least one swivel arm (50, 51) rotatably coupled to the running gear (7, 8, 9 to 12);
fc) a holding device (61) rotatably coupled to the swivel arm (50, 51) for at least one article (4) ;
fd) mutually independently actuable drives (32, 33, 56, 57, 80, 81) for the translational movement, the swivelling motion of the at least one swivel arm (50, 51) and of the holding device (61);
g) the at least one feed carriage (5) simultaneously serves as a tilting apparatus and for said purpose is movable over the dripping zone (101) to a point in the vicinity of the drier (105).

2. System according to claim 1, **characterized in that**
the at least one feed carriage (5) is controllable in such a way that its holding device (61) within the dripping zone (101) is brought into at least two positions, in which it is tilted differently relative to the horizontal.

## Revendications

1. Installation de traitement, notamment de laquage par immersion cataphorétique, d'objets (4) revêtant notamment la forme de carrosseries de véhicules, comprenant
a) au moins un bain (100) renfermant un liquide de traitement dans lequel les objets (4) doivent être plongés ;
b) un système de convoyage à l'aide duquel lesdits objets (4) sont guidés à travers l'installation, en étant alors plongés dans le bain (100) prévu au minimum ;
c) une zone d'égouttage (101) située derrière le dernier bain (100) dans la direction du mouvement ;
d) un dispositif de basculement placé à l'intérieur de ladite zone d'égouttage (101) et dans lequel les objets (4) peuvent être basculés pour prendre, par rapport à l'horizontale, une position angulaire appropriée pour l'égouttage ;
e) un sécheur (105) implanté en aval de ladite zone d'égouttage (101),
**caractérisée par le fait que**
f) le système de convoyage comporte au moins un chariot de transport (5) englobant, pour sa part :
fa) un châssis de roulement (7, 8, 9 à 12) mobile le long du trajet de mouvement des objets (4) ;
fb) au moins un bras pivotant (50, 51) articulé sur le châssis de roulement (7, 8, 9 à 12) prévu au minimum ;
fc) un support (61) articulé sur ledit bras pivotant (50, 51) et destiné à au moins un objet (4) ;
fd) des entraînements (32, 33, 56, 57, 80, 81) actionnables indépendamment les uns des autres, dédiés au mouvement translatoire et au mouvement pivotant du support (61) et du bras pivotant (50, 51) prévu au minimum,
g) ledit chariot de transport (5), prévu au minimum, remplit simultanément la fonction d'un dispositif de basculement et est mobile, à cette fin, au-dessus de la zone d'égouttage (101) jusqu'à proximité du sécheur (105).

2. Installation selon la revendication 1, **caractérisée par le fait que** le chariot de transport (5), prévu au minimum, peut être commandé de telle sorte que son support (61) soit amené, à l'intérieur de la zone d'égouttage (101), à au moins deux emplacements auxquels il subit des basculements différents vis-à-vis de l'horizontale.
